# EUROPEAN PATENT APPLICATION

(11) **EP 4 254 705 A1**
(43) Date of publication of application: **04.10.2023**
(21) Application number: 22382305.5
(22) Date of filing: 30.03.2022
(51) Int. Cl.: H02J 3/00, G06K 9/62

(54) **COMPUTER-IMPLEMENTED METHOD OR ASSESSMENT OF A POWER DISTRIBUTION GRID**

(71) Applicant: Fundación Tecnalia Research & Innovation, 48160 Derio - Bizkaia (ES)
(72) Inventor: Mendia Tellería, Izaskun, Derio (ES); Gil López, Sergio, Derio (ES); Gonzalez Garrido, Amaia, Derio (ES); Cortes Borray, Andrés Felipe, Derio (ES); Rodriguez Seco, José Emilio, Derio (ES)
(74) Representative: Balder IP Law, S.L.

(57) **Abstract**

A computer-implemented method for assessing the state of a low-voltage distribution network comprising a plurality of nodes (17), the method comprising: selecting a node (23) of the low-voltage distribution network (300); assigning a neural network (60) to the selected node (23); training (44) the neural network with a collection of historical data (41) collected during a certain time period, the historical data (41) comprising discrete values of active power measured at each phase (R, S, T) of the selected node (23), discrete values of reactive power measured at each phase (R, S, T) of the selected node (23), magnitude of voltage at each phase (R, S, T) of the selected node (23) and angle of voltage at each phase (R, S, T) of the selected node (23); providing the trained neural network (54) with actual values of active power measured at each phase (R, S, T) of the selected node (23) and reactive power measured at each phase (R, S, T) of the selected node (23); calculating (56) by the trained neural network (54) the magnitude of voltage at each phase (R, S, T) and the angle of voltage at each phase (R, S, T) of the selected node (23).

## Description

### TECHNICAL FIELD

The present invention relates to the field of energy supply. More precisely, it relates to methods and systems for assessing the state of the power distribution grid.

### STATE OF THE ART

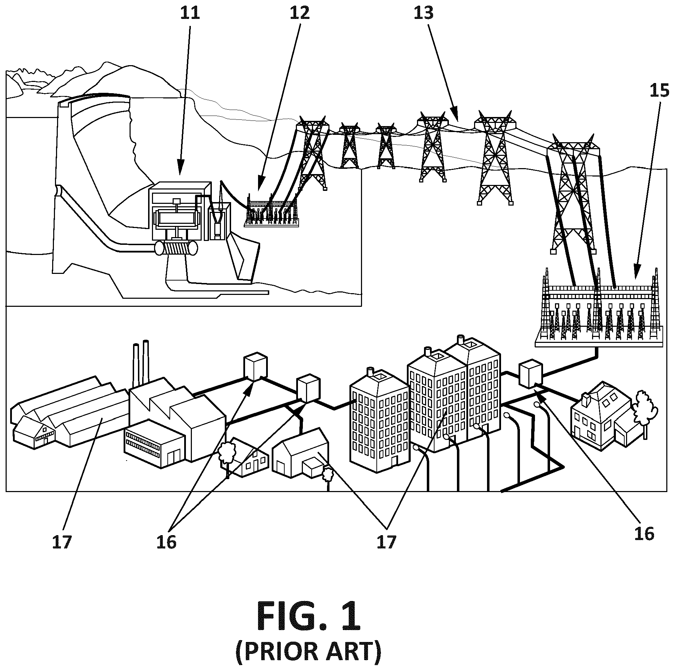

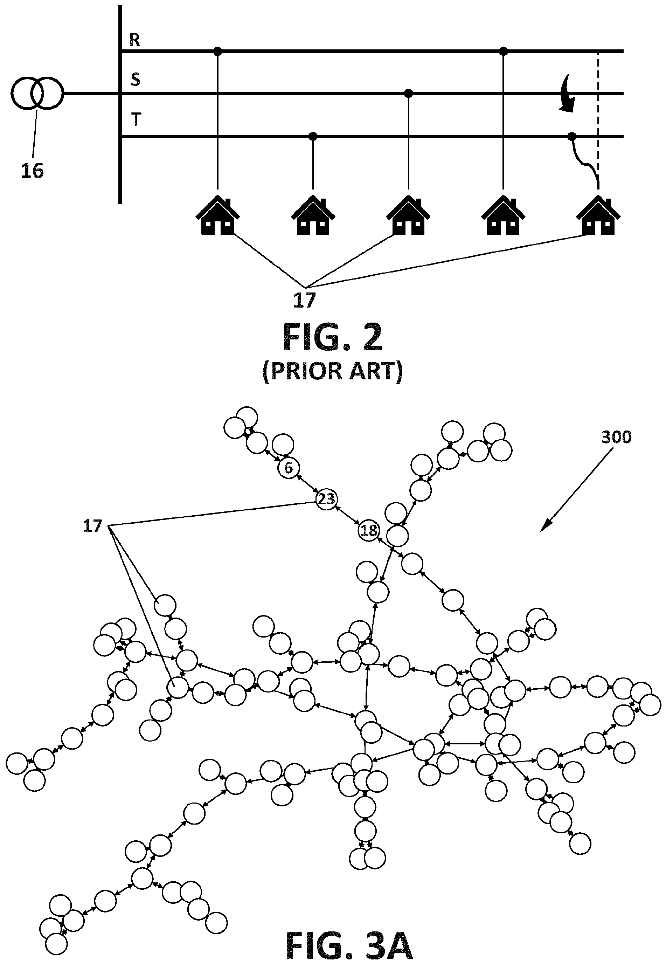

The electricity supply system (also referred to as the electrical grid) is composed of three main stages: generation of the energy required to satisfy consumption; transmission of the generated energy to substations; and distribution of energy to the end customers. Figure 1 illustrates an architecture of the electrical grid. Electricity is generated in central stations 11 and distributed energy resources that produce electrical power. In the case of smart grids, electricity may also be produced by the end-user (called prosumer). Electrical power from central stations is transported through transformer stations 12, transmission lines 13, and primary substations 15. Then the electrical power is distributed through secondary substations in the so-called distribution grid (distribution network) to arrive at final nodes 17 representing consumers, which may be either homes or industrial facilities. The energy that arrives at the secondary electrical substations is distributed through medium voltage lines (usually between 15 kV and 30 kV), either overhead or underground, to transformer substations or transformer centers (TC) 16. The portion of the distribution network starting at the transformer substations or transformer centers 16 is called a low-voltage distribution grid (or low-voltage distribution network). Transformer substations transform the voltage of the energy that arrives at medium voltage (MV) to low voltage values so that it can be supplied to end consumers, such as homes and industries. Therefore, the goal of the low-voltage distribution grid is to carry electrical energy from transformer substations 16 to end-users (nodes 17) through service connections. European low-voltage distribution networks supply electrical energy to consumers through three-phase, four-wire networks (three phases + neutral). Figure 2 shows an example of connectivity of five consumption points (in this case, five domestic households) on the three distribution phases denoted by R, S, T, from a transformer center 16.

An example of a low-voltage network topology is disclosed in Arpan Koirala, Lucia Suárez-Ramon, Bassam Mohamed, Pablo Arboleya, "Non-synthetic European low voltage test system," International Journal of Electrical Power & Energy Systems, v. 118, 2020, doi: 10.1016/j.ijepes.2019 .105712. Until recently, all the information known about the low-voltage distribution network was at transformer substation level. However, with the advent of smart meters, the scenario has changed drastically, offering a set of previously unknown data. The smart meters are installed at the final consumption points from where necessary measurements to perform state estimation can be obtained. There exist state estimation techniques in electrical distribution networks used to know the state of the network in real-time. State estimators are fundamental for the control and operation of the network to design an optimal operation. A conventional state estimator is fed by measurements or pseudo-measurements of active and reactive power, as well as by the topology of the distribution network, which is mainly defined by the admittance matrix (i.e. line characteristics), to provide the voltage magnitude and voltage angle values in its three phases in scenarios with possible errors in measurement accuracy or even the unavailability or lack of such measurements.

Traditionally, the most commonly used algorithms for state estimation have been based on the formulation of optimization using a least-squares method (such as Weighted Least Squares) or some of its variants. This approach uses measurements and physical laws (Kirchoff laws for circuit resolution), to obtain an estimate of the system state variables, i.e., the voltage magnitudes and voltage angles of the nodes throughout the network. Measurements are provided by measuring devices used to obtain values of different electrical variables (e. g. voltage, currents, power flows, etc.) at specific points in the network. Different measuring devices, such as smart meters, LV supervision devices and phasor measurement units (PMUs), located at different points of the distribution network, may be used. An example of modern measuring infrastructure in a European distribution transformer station is disclosed by Cano, Jose M., et al. "Improving distribution system state estimation with synthetic measurements." International Journal of Electrical Power & Energy Systems 129 (2021): 106751. In this disclosure, examples of which measurements can be taken and wherein the network they can be taken, are given. An example of state estimation using static classical algorithms (such as WLS) is disclosed in Táczi, István, et al. "The Challenges of Low Voltage Distribution System State Estimation-An Application Oriented Review." Energies 14.17 (2021): 5363.

These models are based on physical laws, which often lead to non-convex and computationally expensive optimization problems. In addition, Distribution System State Estimation (DSSE) algorithms, such as the Gauss-Newton type, are highly conditioned by their initialization. They behave very differently when different initializations are used, and therefore, they may require many iterations, are strongly affected by missing or erroneous measurements, and do not resolve time dependencies (e.g., dependence on outside temperature) or lack of accurate admittance matrix data. Besides, these approaches have clear scalability problems (global resolution), because as the size of the network (number of nodes) increases, the system becomes computationally more complex and can cause problems of slowness in execution and in the convergence of the algorithm itself, which makes its application for real-time operation and control difficult. An attempt to improve the initialization of these models is disclosed in Zamzam, Ahmed S., Xiao Fu, and Nicholas D. Sidiropoulos. "Data-driven learning-based optimization for distribution system state estimation." IEEE Transactions on Power Systems 34.6 (2019): 4796-4805, which proposes using historical or simulation-derived data to train a shallow neural network to learn to initialize a Gauss-Newton algorithm.

An additional problem is that these algorithms are greatly affected by erroneous measurements (especially outliers or out-of-sample elements) and, finally, their application is limited to stationary measurements, i.e., not time-dependent. This last point limits their application in a real scenario, since a key factor in classical state estimation techniques (WLS, Weighed Least Squared) is their dependence on the admittance matrix and exogenous variables such as external temperature. The admittance matrix is constituted by inventory measurements of cables along with the network topology, i.e., it provides data of the resistance and reactance of the cable connecting two nodes. These are usually inventory data that are not updated over time and, therefore, do not consider the cable degradation over time. Thus, cables of different ages (or with different conditions in their lifetime, e.g., splices) cause alterations in the state estimates, increasing the uncertainty in the voltage and angle estimation. Additionally, the reported state of a switch may not be correct and it must detect that the network topology and admittance matrix has changed. As a result, these uncertainties affect the accuracy of the state variable estimation results.

In addition, these techniques have been mainly applied in medium-high voltage networks (transmission systems) because in the case of low voltage networks, the resistive component in the admittance matrix is predominant over the network reactance, which makes it difficult to perform electrical simplifications in the network model. Another problem faced by classical schemes is the principle of observability of a network in a state estimation problem. Observability consists of analyzing the set of available measurements in such a way as to define the areas of the network where the calculation of the estimated state is assured and the areas of the network that are difficult to observe. Unlike transmission networks, distribution systems are nominally unobservable. While in transmission, the measurement units are located at almost every node in the network, the task of state estimation in distribution systems is especially difficult due to the scarcity of real-time measurements caused mainly by the scarcity of measurement devices. WLS cannot be used when the system is unobservable because it turns the set of algebraic equations into an underdetermined and, therefore, deterministically unsolvable system.

In the case where there are unobservable areas of the network, pseudo-measurements must be incorporated to make the distribution network under study observable and, consequently, the state estimator can be applied to the whole distribution network. The objective is to obtain a state estimator where the distribution network is observable in its entirety. To do so, it must meet the observability test, i.e., m ≥ N', where m is the number of linearly independent measurements and N' is the number of variables associated with the vector of state variables. It is recommended that at least m ≈ 2N'. Furthermore, in a balanced three-phase system (through its equivalent single-phase), it can be stated that the number of state variables should correspond to 2N-1, with N being the number of nodes. However, in an unbalanced three-phase system, it is necessary to consider the measurements of all phases and neutral of the system individually, so the number of state variables must be calculated through the following expression: N'= 2(4N)-1, being N' the number of state variables and N the number of nodes of the network (A. M. Agwa and N.E. Ghanem, "Observability analysis and state estimation approach of power system", Journal of Al Azhar University Engineering Sector, Vol. 13, n° 46, January 2018, 104-111).

On the other hand, the topology of the low voltage network is characterized by being radial or poorly meshed with a high number of nodes, which increases the size of the problem to be solved. All these peculiarities of distribution networks with respect to transmission networks imply that the network models and physical parametric equations of the state estimator for a transmission network cannot be applied to low voltage distribution networks.

In short, in the low-voltage distribution network, due to several factors (the low observability, at least until the introduction of smart meters, the fact that it is a three-phase network normally unbalanced, its radial topology and resistive nature), the classical formulations to the state estimation problem require adaptations for the design of the parametric physical equations that describe the behavior of the system. This fact has caused and continues to cause a lack of approaches in the literature that deals with this casuistry.

To overcome the disadvantages of classical approaches in the state estimation on low-voltage distribution networks, some approaches based on machine learning techniques have been proposed, for example in Tran, M. Q., Zamzam, A. S., & Nguyen, P. H. (2021), "Enhancement of Distribution System State Estimation Using Pruned Physics-Aware Neural Networks", arXiv preprint arXiv:2102.03893. In this proposal, a global resolution of the network is performed by introducing the physics-aware concept, i.e., introducing domain knowledge within the architecture of the neural network itself. This is achieved by introducing the topology of the low voltage network into the actual structure (connection) of weights of the hidden layers of the neural network.

However, this approach cannot be used when the topology of the distribution network is not available. Moreover, being a global resolution method, the computational cost is very high. Indeed, this method depends on the observability of the network, like classical methods.

Therefore, there is a need to develop new methods of estimation of the state of energy distribution networks that overcome the drawbacks of the conventional ones.

### DESCRIPTION OF THE INVENTION

The present invention overcomes the drawbacks of conventional methods of assessment or estimation of the state of low-voltage energy distribution networks, by applying artificial intelligence (Al) techniques on a node-by-node basis. From measurements taken at a single node, the method applies Al techniques for automatically estimating the magnitude and angle of the voltage of each phase at the node. The method can be applied in as many nodes of the low-voltage network as desired, provided there are available measurements or measurement estimates.

In the context of the present invention, a node is an element of the low-voltage distribution network where measurements or pseudo-measurements are available. Pseudo-measurements are the expected value of measurements. For example, predictions of, e.g. consumption, can be used for predictive control. Parameters to be measured or predicted at a node are, for example, active and reactive injected power, and magnitude and angle of voltage per phase. The power injection into a node can be positive or negative, depending on the direction of the energy flow, resulting in a generation or consumption point, respectively. A node can also be any point of aggregated consumption and/or generation, such as a general protection box, which represents the aggregated consumption of several end-users/points. The method provides state estimations (voltage magnitude and voltage angles per phase) at each of these nodes. A node can be an energy consumption/generation point provisioned with measurements or with measuring means, such as measuring instrument. The definition of the node as an "energy consumption/generation" point must be understood in the sense that the element or system downstream may have not only traditional power consumption capacity but also power generation capacity, as is the case in certain facilities provided with power generation means, such as solar panels. In this text, the expression "energy consumption/generation point" is used in general, understanding that certain elements or end points (nodes) may not have only consuming capacity.

The power measurements per node (active and reactive injected power) are taken at a certain sampling time. The sampling time will determine the time at which the state estimators (voltage magnitude and voltage angles per phase) at a node will be provided. This can be done in real-time. The sampling time may vary between 1 and 60 minutes, such as between 1 and 30 minutes, or between 1 and 15 minutes, or between 5 and 15 minutes.

The measurements available at a node can be obtained by a smart meter, which is an endpoint from which power or voltage (magnitude and angles) measurements can be obtained to perform state estimation. Smart meters, in addition to allow the exchange of information between the meter and a remote management system in a bidirectional manner (allowing not only knowledge but also the ability to act), provide periodical information (such as quarter-hourly measurements) on the consumption/generation patterns at the end point of the low-voltage network, which is the point of consumption (homes, buildings, commercial or industrial points, etc.). Alternatively, the measurements can be obtained by other meters located in an intermediate node, such as transformer station supervisors (TSS) or line supervisors (LS), network analyzers or PMUs, which are devices used to estimate the magnitude and phase angle of an electrical phasor quantity (such as voltage or current) at a point in the electricity grid using a common time source for synchronization. PMUs are capable of capturing samples of a waveform in quick succession and reconstructing the phasor quantity, consisting of an angle and a magnitude measurement.

The method of the invention can estimate the state of the low-voltage distribution network by calculating the voltage magnitude and angle per phase (if the system is a three-phase system), at one node of the low-voltage distribution network in real time or as fast as the measurements or pseudo-measurements are available. The measurements may be available immediately (for example, every minute) or after a longer period (for example, provision of a set of historical data). The method can be executed in as many nodes of the network as desired, but the execution at each node does not require information (i.e., measurements) of other nodes different than the node under analysis.

In the context of the present invention, the term "sampling time" must be understood as the minimum time discretization in which measurements are taken at a node. The sampling time may for example vary between 1 and 60 minutes, such as between 1 and 30 minutes, or between 1 and 15 minutes. The sampling time can be, for example, 15 minutes, 5 minutes, or 1 minute. The input data required to perform this estimation at a node is, for each phase: the active and reactive power by the node (it could be positive or negative depending on whether the node consumes or generates). These data have been previously measured or estimated. This data has to be provided for performing the state estimation: this is either sent from a meter (such as a smart meter or a PMU) or has been previously predicted. A state estimation can only be performed once there are available measurements or predictions (pseudo-measurements) of the active and reactive power injected at a node. Therefore, there must be a training dataset, active and reactive power measurements or predictions and values of per-phase magnitude and per-phase angle voltages at the node.

The method can be applied using predictions, measurements or historical data of active/reactive powers providing the state estimation once the inputs (predictions, measurements or historical data) are provided.

The method applies artificial intelligence techniques based on a neural network, in particular a unidirectional feed-forward neural network, and preferably a multilayer perceptron (MLP) neural network. These techniques enable obtaining an estimation of voltage values (magnitudes and angles) of single nodes of the distribution network, in a way that does not need any knowledge of the network topology. This means that the method is applicable to a single node; or, in other words, it can be applied to a plurality of nodes of a low-voltage distribution network, but individually to each node, without requiring additional information or redundant measurements, taken at other nodes of the distribution network.

In order to reduce computational complexity, provide real-time measurements for training the algorithm and improve the inference capability of the values at each node depending on the availability of measurements, the algorithm (preferably MLP algorithm) uses a per-node computation to perform the training and, therefore, the inference. That is, nodal modelling is proposed, using one neural network for each node of the low-voltage network. The model (algorithm) is agnostic to the network topology, meaning that it does not need information about the network topology. It simply needs the active/reactive injected power (active/reactive measured power) per phase, as measured at a node. The model is also agnostic to the type of equipment with which measurements have been collected or the way or model to obtain the input data to MLP.

To perform the state estimation of a node, a training process of the neural network must be previously performed. The training process needs historical data of active/reactive power measured at the node and of per-phase voltage magnitude and the angle at the node, obtained from any conventional meter. Once a training data set is obtained, and the model is trained, the state estimation of the node can be performed from measurements or pseudo-measurements of active/reactive power at the node, thus dramatically reducing the data communication within the network (if measurements are obtained with smart meters) and the monitorization cost (if measurements are obtained with PMUs).

The training or learning of the Al model is also done locally per node, without requiring information about other nodes of the distribution network. Only if information (active/reactive power) of neighboring nodes is available, it can optionally be used to train the model and later to estimate voltage values (magnitudes and angles) of a node. Measurements taken at neighboring nodes can optionally be used to improve the estimation. In the context of the present invention, the term "neighboring" applied to a node refers to an adjacent node, meaning that no other node is disposed between two neighboring or adjacent nodes. The nodes in a low-voltage distribution network have at least one neighboring (adjacent) node. Outer nodes are nodes having at most one neighboring node. Inner nodes are nodes having two or more neighboring nodes.

The obtained grid state estimation (per-phase voltage magnitude and voltage angle) can then be used to correct the voltage profile and therefore optimize, or at least increase, the quality of service for end-users in the distribution network. For example, control means in the distribution network can use these estimations to take any action to minimize the distribution losses and/or identify network problems, malfunction, or disconnections.

In a first aspect of the invention, a computer-implemented method for assessing the state of a low-voltage distribution network comprising a plurality of nodes is provided. The method comprises: selecting a node of the low-voltage distribution network; assigning a neural network to the selected node; training the neural network with a collection of historical data collected during a certain time period, the historical data comprising discrete values of active power measured at each phase of the selected node, discrete values of reactive power measured at each phase of the selected node, the magnitude of the voltage at each phase of the selected node and the angle of the voltage at each phase of the selected node; providing the trained neural network with actual values of active power measured at each phase of the selected node and reactive power measured at each phase of the selected node; calculating by the trained neural network the magnitude of the voltage at each phase and the angle of voltage at each phase of the selected node.

In embodiments of the invention, the method further comprises repeating the former steps for a plurality of nodes of the low-voltage distribution network.

In embodiments of the invention, the neural network is a multilayer perceptron neural network.

In embodiments of the invention, the historical data with which the neural network is trained further comprises discrete values of active power measured at each phase of at least one neighboring node and discrete values of reactive power measured at each phase of at least one neighboring node; and the actual values provided to the trained neural network further comprise actual values of active power measured at each phase of the at least one neighboring node and reactive power measured at each phase of the at least one neighboring node.

In embodiments of the invention, the method further comprises, prior to training the neural network, applying a feature selection technique for reducing the number of input variables, and after the reduction, feeding the resulting subset of entries into the neural network for training.

In embodiments of the invention, the actual values provided to the trained neural network further comprise discrete values at a previous time instant of at least one of the following: per-phase voltage magnitude and per-phase voltage angle at the node under analysis; active and reactive power per phase at the node under analysis; active and reactive power per phase at the at least one neighboring node.

In embodiments of the invention, the historical data and actual values captured at a node are measurements made with a smart meter, or with a network analyzer, or with a phasor measurement unit, or with a transformer station supervisor or with a line supervisor. For example, the historical data and actual values captured at a node are measurements provided by a distribution network SCADA, which may collect the measurements from a range of different devices, such as smart meters, PMUs, etc.

In embodiments of the invention, the historical data are captured along a period of between 1 and 3 months.

In embodiments of the invention, the historical data and actual values captured at a node are captured with a sampling frequency of between 1 and 60 minutes.

In embodiments of the invention, the training process is performed offline.

In embodiments of the invention, the training process is performed using a sliding window whose temporal size is the size of said temporal period, thus allowing to dynamically adjust the learning process to the real conditions of the selected node.

In embodiments of the invention, the method further comprises, from the calculated magnitude of the voltage at each phase and the angle of voltage at each phase of at least one selected node, actuating on the distribution network to minimize distribution losses and/or identify diverse problems of the distribution network, such as congestion and voltage limit violation.

In a second aspect of the invention, a device is provided, comprising processing means configured to perform the training stage of the method of the first aspect of the invention.

In a third aspect of the invention, a device is provided, comprising processing means configured to perform the estimation stage of the method of the first aspect of the invention.

The devices of the second and third aspects can be the same device or different devices. They are preferably different devices because their processing and memory capacity is different: while the processing means in which the training stage is performed requires more computing resources (due to the potentially large amount of data it needs), the processing means in which the estimation stage is performed requires much less computing resources (it receives actual input data and provides a prediction with the already trained model).

The method is implemented in one or more processing devices, which can be part of a processing system. One or more processing devices comprises at least one memory that may include instructions, for example in the form of a computer program code, so that a method according to the present invention is carried out upon execution of the instructions. The processing device may comprise a communications module, at least in embodiments in which it is communicatively coupled with other processing devices. As a matter of example, with no limiting purpose, each element or entity may include one or more processing devices.

In a fourth aspect of the invention, a computer program product comprising computer program instructions/code for performing the method of the first aspect of the invention is provided.

In a fifth aspect of the invention, a computer-readable memory/medium that stores program instructions/code for performing the method of the first aspect of the invention is provided.

The algorithm (model) on which the method is based is computationally very efficient, ensuring a good balance between the minimum input data required (for example with respect to classical Weighed Least Squared algorithm, which requires a much larger set of data related to the network observability), the quality of the solution provided and the computation time. The training stage, based on previous states, favors self-adaptability to temporal changes that occur in the distribution network.

Besides, the method reduces the communications load because of the reduced data set needed to perform the method.

The proposed method does not require observability, redundant measurements, knowledge of the matrix of admittances of the nodes or even knowledge of the network topology.

The basis underlying the invention is that current and voltage are related by means of admittance, this being specific to the node under study. In cases in which information from neighboring nodes is used (because the network topology is known), it is assumed that the effects on voltage (which is the state variable to be estimated) due to power at other nodes decreases as the distance between nodes increases. For this reason, it is enough to use data from for example two neighboring nodes. Moreover, in cases where the admittance between nodes is affected by exogenous effects, such as external temperature, the proposed node-specific learning is the best option, and a training time horizon of between 1 and 3 months is preferably chosen in order to guarantee homogeneous or similar conditions.

While in the state of the art, a global resolution of the network is performed by introducing the physics aware concept, i.e., introducing domain knowledge within the architecture of the neural network itself (this is done by introducing the topology of the low-voltage network into the very structure (connection) of weights of the hidden layers of the neural network), the current proposal is a topology-agnostic method, solved by performing node-by-node computations of the network in isolation.

In sum, the invention permits to improve the state estimation of a low-voltage network on a node-by-node basis. Improving the state estimation improves the quality of service, enables the identification of system anomalies (grid congestions, voltage limit problems, etc.), improves security systems, and saves energy in network maintenance (especially in the mechanisms of establishment and stability of the voltage). In addition, the proposed scheme requires less computational cost than classical resolution schemes since it calculates the state variables per node instead of applying a global resolution.

Additional advantages and features of the invention will become apparent from the detailed description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 illustrates a conventional architecture of an electrical grid.
Figure 2 shows an example of connectivity from a MV/LV transformer substation to five end-user points on the three distribution phases in a conventional low-voltage distribution network.
Figure 3A illustrates a low-voltage distribution network of an electrical grid, according to embodiments of the invention.
Figure 3B illustrates a portion of a low-voltage network, for example, the one shown in Figure 3A.
Figure 4 shows a flow diagram of the training process to train a neural network used by the method according to embodiments of the invention.
Figure 5 shows a flow diagram of the training process to train a neural network, and the execution process once the neural network is trained, used by the method according to embodiments of the invention.
Figure 6 schematically illustrates a MLP network having a plurality of inputs and a plurality of outputs, according to embodiments of the invention.
Figure 7 shows a flow diagram of the training process to train a neural network, and the execution process once the neural network is trained, used by the method according to other embodiments of the invention.
Figure 8 shows the voltage magnitude for phase R obtained after applying the method of the invention to a node of a low-voltage distribution network.
Figure 9 shows the voltage angle for phase R obtained after applying the method of the invention to a node of a low-voltage distribution network.

### DESCRIPTION OF A WAY OF CARRYING OUT THE INVENTION

The following description is not to be taken in a limiting sense but is given solely for the purpose of describing the broad principles of the invention. Next embodiments of the invention will be described by way of example, with reference to the above-mentioned drawings, showing apparatuses and results according to the invention.

A computer-implemented method for obtaining the state of a low-voltage distribution network (also simply referred to as a low-voltage network) is explained next. The method is applicable to the nodes (to single nodes) forming a low-voltage distribution network in an electricity supply system or electrical grid. In particular, the method is applicable to nodes of the low-voltage distribution network where active and reactive power measurements or pseudo-measurements, as well as values of magnitude and angle of voltage per phase, are available. The nodes are also referred to as end consuming/generating points provisioned with measuring means. The measurements are captured with different available measuring means, such as smart meters installed at end-user points in the low-voltage network, network analyzers, PMUs, transformer station supervisors (TSS) or line supervisors (LS).

The method is based on a neural network in which learning is limited (confined) to a single node of the network, without requiring any knowledge of the network topology and/or node connectivity. A neural network is assigned or deployed in a node (in as many nodes as desired) of the network. The method enables to obtain an estimation of voltages (magnitude and angle) per phase at different nodes in the network without the need to know the network topology, the connectivity of each node or to which line phase each node is connected.

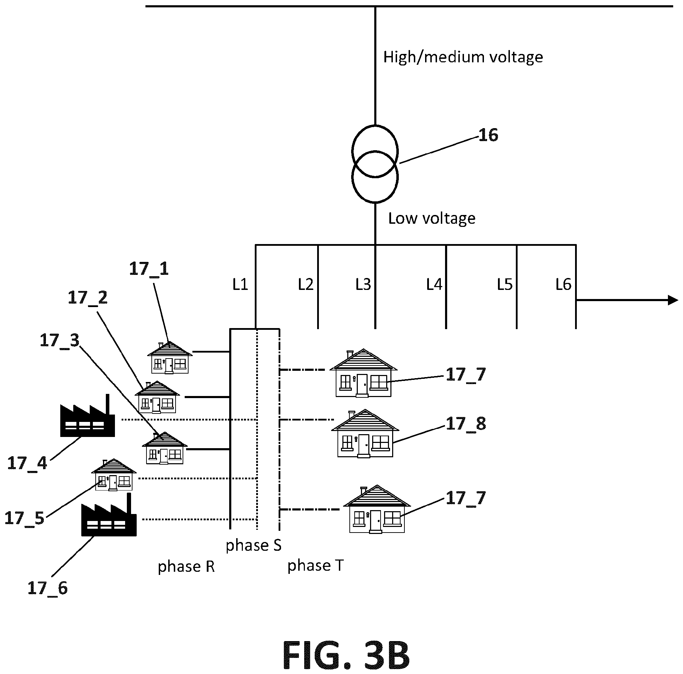

Figure 3A shows a possible implementation of a low-voltage distribution network 300 to which the method of the invention is applicable. The low-voltage distribution network of the example has a plurality of nodes (end consuming/generating points provisioned with measuring means) 17. Figure 3B shows a portion of a low-voltage network (for example the low-voltage network of Figure 3A). At the transformer substation (transformer center) 16 medium voltage is switched to low voltage. Several distribution lines L1-L6 leave from transformer center 16. Each distribution line has three phases (R, S and T), to which different nodes (consumer/generator points with measuring equipment) are connected. In Figure 3B, several end points or nodes (homes and industrial facilities) are connected to distribution line L1: nodes 17_1, 17_2 and 17_3 are connected to the phase R of line L1; nodes 17_4, 17_5 and 17_6 are connected to the phase S of line L1; and nodes 17_7, 17_8 and 17_9 are connected to the phase T of line L1. Each node 17_1 - 17_9 can represent or be equipped with a smart meter, or be equipped with a network analyzer or a PMU or another meter, which can represent an individual end user or the aggregated power of several end users (for example, a general protection box in a building with several homes).

The method of the invention estimates the state of the low-voltage distribution network by calculating the per-phase voltage (magnitude) V and per-phase angle Θ of the voltage at one or more nodes of the network in real time or as soon as the needed measurements are available. To perform this computation, for each phase (the system can be single-phase or three-phase, although it is usually three-phase), measurements or pseudo-measurements of the active power (P) and the reactive power (Q) at the node are required.

Values of these parameters (for each phase, active and reactive injected power) are real values measured, for example with the aid of smart meters, or it can also be predicted values (known also as predictions or pseudo-measurements). Nowadays, most of the nodes in a distribution network have a smart meter associated thereto. Smart meters typically capture the values of certain parameters periodically, such as every 5 minutes, or every 15 minutes, or every 30 minutes. From these values, voltages (magnitude and angle) per phase at each node can be estimated in real time using a trained neural network.

The nodes at which the state of the low-voltage network is estimated can be outer nodes or inner nodes. In Figure 3B, nodes 17_1, 17_3, 17_4, 17_6, 17_7 and 17_9 are outer nodes (they are the first node or the last node connected to the respective phase of line L1, meaning that they only have one neighboring node), while the remaining nodes (17_2, 17_5, 17_8) are inner nodes (they have two neighboring nodes). Inner nodes typically have two or more neighboring nodes, see for example certain nodes in the low-voltage network 300 of Figure 3A, which have more than two neighbors.

The method applies artificial intelligence techniques based on neural networks, preferably based on multilayer perceptron (MLP) neural networks, which enable obtaining an estimation of per-phase voltage values (magnitudes and angles) of single nodes of the distribution network, in a way that does not need any knowledge of the network topology. The method is applicable to a single node. In other words, it can be applied to a plurality of nodes of a distribution network, but the training or learning of the Al model is done locally, without requiring information of other nodes of the distribution network. Only if information (such as active/ reactive injected power) of neighboring nodes is available, it can optionally be used to estimate voltage values of a node.

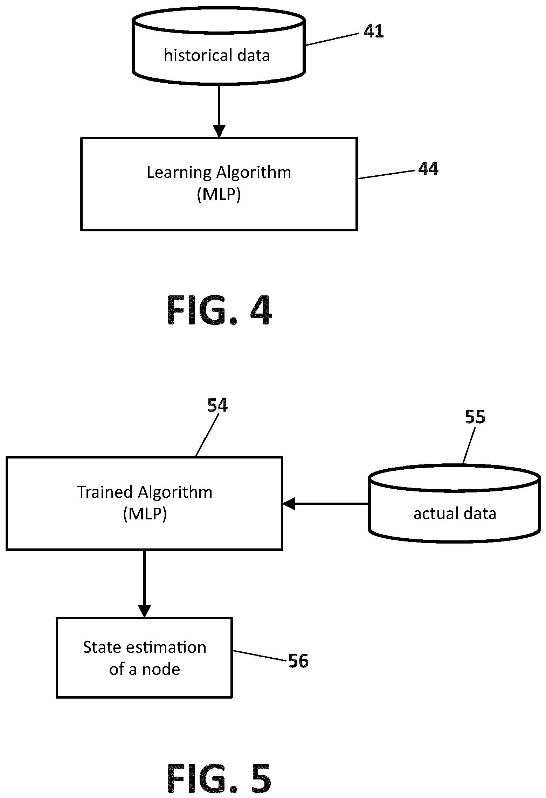

To perform the estimation of voltage magnitude and angle per phase in a node, a training process must be previously performed. A general block diagram of the training process is shown in Figure 4. In this process, an artificial intelligence (Al) model or algorithm is trained (block 44) with training data 41. At the learning or training stage (block 44), measurements (or pseudo-measurements) of active and reactive injected power at the node and per-phase magnitude and angle of voltage at the node, are required. Once the algorithm is trained, real time state estimation of per-phase voltage magnitude and per-phase voltage angle at the node can be performed from measurements or predictions of active and reactive injected power at the node, as shown in Figure 5. In Figure 5, the trained algorithm 54 is fed with actual data 55 (measurements of active and reactive power captured or provided at the node, or predictions thereof) and a state estimation of the node is provided (block 56). The selected Al algorithm is a multilayer perceptron (MLP) neural network.

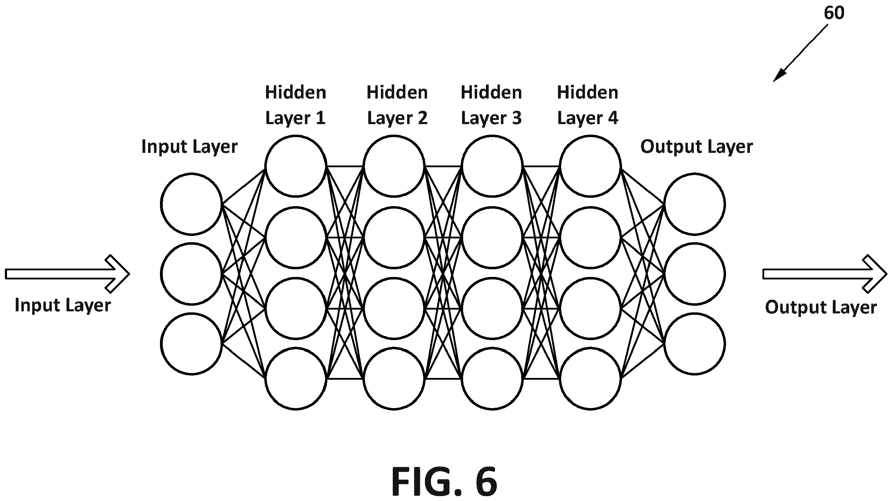

Figure 6 shows a possible implementation of a unidirectional feed-forward neural network, having a plurality of inputs and a plurality of outputs, that can be used by the method of the invention. The network is a MLP network 60. It is used to represent nonlinear relationships between variables (nonlinear relationships between active and reactive power values and the state (voltage magnitude and angle, for each phase)) of the low-voltage network. MLP networks are particularly suitable for working with solvable problems in noisy multi-input, multi-output systems. In a MLP network, each neuron is connected to all neurons in the next layer. The flow of information advances through successive layers. The MLP network has an input layer, an output layer and at least one hidden layer. In Figure 6, as a matter of example, four hidden layers are depicted. The one or more hidden layers provide levels of abstraction and perform non-linear processing of data received from preceding layers. Predictions are made in the output layer. Each node uses an MLP network 60, which is trained with historical measurements collected over a period of time T at that particular node. The period of time T preferably varies between 1 and 6 months, more preferably between 1 and 3 months (e.g. measurements are collected during the last 3 months). In the historical time period T, the measurements have been collected with a certain sampling time, preferably varying between 1 and 60 minutes (e.g., 15 minutes). The historical measurements are a set of actual input and output data (input and output of the training model or algorithm 60). The input data are active and reactive power values; the output data are per-phase voltage magnitude and angle. Historical series with some discretization (e.g., 1 to 15 minutes) are therefore available. These historical data are used to train the model 60. The training process is an offline process that can be performed on any computing element, such as a computer.

In embodiments of the invention, the training process is performed using a sliding window with adjustable temporal size. This is for example the case when measurements are captured with a smart meter. For example, the temporal size of the window is the size of the time period T (preferably between 1 and 3 months). This allows to dynamically adjust the learning process to the real conditions of the selected node. Alternatively, the temporal size of the window could be shorter than the time period T (for example, one week), to adjust the learning process even more. In sum, the training dataset is adjusted in time.

Considering a node of the low-voltage network (see for example Figure 3B), the input data to the MLP network 60 is the active power P in each current phase and the reactive power Q in each current phase. For example, considering node 17-3, the input data is: P_{R_17_3}(t), Q_{R_17_3} (t), P_{S_17_3} (t), Q_{S_17_3} (t), P_{T_17_3} (t), Q_{T_17_3} (t), wherein P denotes the active power, Q denotes the reactive power, R, S and T denote the three phases, 17_3 denotes the node number and t denotes the time instant at which the measurements were collected. The output data (also provided for training to the MLP network 60) is the magnitude and angle of the voltage in each phase. Referring again to node 17-3, the output data is: V_{R_17_3} (t), θ_{R_17_3} (t), V_{S_17_3} (t), θ_{S_17_3} (t), V_{T_17_3} (t), θ_{T_17_3} (t), wherein V denotes the magnitude of the voltage, θ denotes the angle of the voltage, R, S and T denote the three phases, 17_3 denotes the node number and t denotes the time instant at which the measurements were collected. Therefore, the model is provided with 6 input values and 6 output values per time instant. The training horizon is a period of time T, in which measurements are collected with a certain sampling time (Δf).

The model (neural network 60) is preferably trained using Neural Architecture Search (NAS) techniques, that is to say, optimizing the number of layers, the number of neurons per layer and the values of the weights between hidden neurons. For example, the training process can be performed using the Adam method, which is based on choosing the weights of the hidden neurons that minimize the quadratic sum of distances between the measured variables and the estimates made (both voltage and voltage angles, i.e., network outputs). The number of hidden layers and weights of the respective neurons, as well as the activation functions, are selected using conventional methodologies (e.g. Grid Search), in which different options are evaluated and the one that provides the best results in terms of error is chosen. Non-limiting examples of activation functions that can be chosen are hyperbolic tangent, ReLu, etc. To guarantee statistical robustness in the results, the training process can be accompanied by classical K-Fold schemes, which are outside the scope of the present invention.

The MLP network is trained following a back-propagation process of the error and it is based on adapting the weights of the neurons of the different hidden layers to quantify the influence of each neuron on the output. As a global cost function, it preferably uses the mean square error and the gradient descent function is preferably applied to this global cost function. This process uses input instances in the input layer as stimulus and propagates them through the hidden layers to generate the output in the output layer. The result obtained in the output neurons is compared with the actual desired output. The mean square error is calculated for each output neuron. These errors are then transmitted backwards from the output layer to all the neurons in the hidden layers that contribute directly to the output, receiving a percentage error that approximates the participation of the neuron in the hidden layers with respect to the original output. This process is repeated layer by layer, until the neurons in the network receive the error describing their relative contribution to the total error. Based on the error value received, the connection weights of each neuron are readjusted so that the next time the same sample is provided, the output is closer and closer to the desired output.

For example, when a grid-search approach is used, the internal parameters of the MLP scheme to be optimized are:
(1) The number of layers and neurons of the MLP model: (1a) The number of input and output neurons. The input layer is responsible for receiving the input variables and propagating them to the next layer. The output layer provides the network response for each input sample to the outside. The definition of which the input and output variables are and therefore the number of neurons in both layers depends on the context. (1b) The number of layers and number of hidden neurons. Generally, an increase in the number of hidden neurons increases learning efficiency. However, there is an optimal range in the number of hidden neurons, i.e., outside this range the results may worsen. In any case, the tendency is to have as few hidden neurons as possible, since the learning process will be faster.
(2) The optimization algorithm (optimizer) (for example the Adam method), which best solves the gradient computation in the search for a global minimum (values of weights associated to the neurons).
(3) The activation function. Each neuron of the network processes the information received by its inputs and produces a response or activation that propagates, through the corresponding connections, towards the neurons of the next layer. An activation function is, therefore, a function that transmits the information generated by the linear combination of weights and inputs, i.e. it is the way of transmitting the information to the output connections. The activation function does not necessarily have to be common to all layers.
(4) The learning rate. It is a hyper-parameter that controls how much to change the model in response to the estimated error each time the model weights are updated. Choosing the learning rate is a challenge, as too small a value may result in a long training process that could bog down, while a larger value indicates greater modification of the weights at each iteration and thus faster learning and may result in learning a suboptimal set of weights too quickly or an unstable or oscillating training process.
(5) The decay value of the learning rate. It is a parameter that indicates how slowly the learning rate decreases with time.
(6) The weights initialization function (kernel initializer). It defines the method for setting the initialization weight for the neurons in each layer. This function does not need to be common to all layers.

Once the model has been trained, and given the real-time inputs 55 (active and reactive power per phase at a current time instant, t) at a node, the trained model 54 is able to estimate 56 the voltage magnitude and voltage angle per phase. Therefore, the algorithm or model 54 is a real-time state estimator. To do so, the model 54 is fed with measurements 55 temporally discretized with the same spacing (sampling time Δf) as those with which it was trained, providing the network states at that same time frequency.

The former process (training process and estimation process) can be done for any node -either inner node or outer node- in the low-voltage network, for which there are available measurements.

The training and estimation processes can be enhaced with data of neigboring nodes. This is specially interesting for inner nodes (nodes having at least two neighboring nodes), but also for outer nodes (nodes having a single neighboring node). If data of neigboring nodes is available, considering for example node 17_2 in Figure 3B, the input data to the MLP network 60 is the active power P by node 17_2 in each phase and the reactive power Q by node 17_2 in each phase; as well as the same information (active and reactive power per phase) for each of the two neighboring nodes 17_1 and 17_3. In this case, the input data is formed by the following 18 measurements per time instant t: P_{R_17_2}(t), Q_{R_17_2} (t), P_{S_17_2} (t), Q_{S_17_2} (t), P_{T_17_2} (t), Q_{T_17_2} (t), P_{R_17_1}(t), Q_{R_17_1} (t), P_{S_17_1} (t), Q_{S_17_1} (t), P_{T_17_1} (t), Q_{T_17_1} (t), P_{R_17_3}(t), QR_17_3 (t), P_{S_17_3} (t), Q_{S_17_3} (t), P_{T_17_3} (t), Q_{T_17_3} (t). The output data (also provided for training to the MLP network 60) is the same as in the case of not considering neighboring nodes, that is to say, the magnitude and angle of the voltage in each phase (6 measurements per time instant): V_{R_17_2} (t), θ_{R_17_2} (t), V_{S_17_2} (t), θ_{S_17_2} (t), V_{T_17_2} (t), θ_{T_17_2} (t). Therefore, the model is provided with historical data comprising sets of 6 × 3 = 18 input values and 6 output values per time instant.

In the case of a node having a single neighboring node, the model is provided with historical data comrpising sets of 6 × 2 = 12 input values (6 input values of the selected node plus 6 input values of the neighboring node) and 6 output values per time instant. In general, when a node has G neighboring nodes, the model can be provided with historical data comrpising sets of 6 × (G+1) input values (6 input values of the selected node plus 6xG input values of the G neighboring nodes) and 6 output values per time instant.

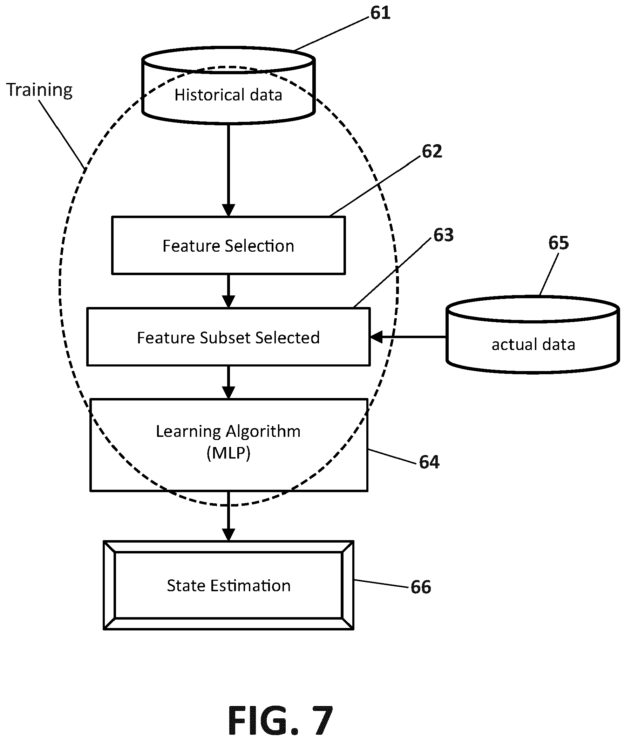

In this case, although the same training process as explained with reference to Figure 4 can be performed, the training process as schematically shown in Figure 7 can be used alternatively. The historical data 61 is the collection of input values (in the case of 2 neighboring nodes, 6 values belonging to the node and 12 values belonging to the two neighboring nodes) and 6 output values, per time instant within a training horizon T. It is noted that, if the inner node under analysis has more than two neighboring nodes (for example, three ones), then the historical data 61 will comprise 6 additional values per time instant, belonging to the third neigboring node. The training process includes a stage of feature selection 62 to optimize the input selection process when the historical data 61 includes information from neighboring nodes, as is the case. Feature selection 62 avoids providing the model 60 to be trained with inputs that do not provide relevant information. For example, if a neighboring node consumes no or very little power, and therefore the network does not associate that neighboring node with the voltage and angle condition, then feature selection 62 will eliminate it without the need for human supervision. In other words, low levels of active/reactive power do not affect the states of neighboring nodes, while high values of active and/or reactive power do. Thus, including feature selection schemes automates the process of deciding whether or not to include values from neighboring nodes in the inference process.

In other words, prior to inputting the inputs into the neural network 60, the historical data 61 are passed through a feature selection stage 62 to reduce, if possible, the initial number of inputs. As a feature selection technique, any technique can be used to eliminate redundant information (correlation between inputs) or unnecessary information (low information content). By way of example, and without limitation, the Principal Component Analysis (PCA) technique can be used (Malhi, A., & Gao, R. X. PCA-based feature selection scheme for machine defect classification. IEEE transactions on instrumentation and measurement, Vol. 53, Issue 6, pp. 1517-1525, 2004), which performs the feature selection process by diagonalizing the covariance matrix of the inputs. After such feature selection stage 62, the initial number of entries, N, is reduced to M, being M ≤ N. After the dimensional reduction, the resulting entries (subset of entries 63) are fed into the MLP algorithm 64 for training. The training process continues in a similar way as disclosed with reference to Figure 4.

Once the model has been trained, and given the real-time (or actual) inputs 65 (in this case, active and reactive power generation per phase at the node under analysis and at the neighboring nodes, at a current time instant, t), the trained model 64 is able to estimate 66 the voltage magnitude and voltage angle per phase of the node under analysis. The actual data (real-time inputs) 65 is fed to the selected feature subset 63 to accommodate it, if necessary, to the feature selection and subsequent training. In other words, to discard current values of (for example) a neighboring node having a negligible impact on the node under analysis.

Optionally, the real-time (or actual) inputs 65 can comprise not only values or measurements at the node under analysis and at the one or more neighboring nodes at a current time instant, t, but also at a previous time instant t-1 (the immediately previous values or measurements). This may improve the accuracy of the prediction. For example, the real-time inputs 65 can comprise per-phase voltage magnitude and per-phase voltage angle at t-1 at the node under analysis; and/or active and reactive power per phase at t-1 at the node under analysis; and/or active and reactive power per phase at t-1 at the at least one neighboring node. In embodiments of the invention, the real-time inputs 65 can also comprise per-phase voltage magnitude and per-phase voltage angle at t-1 at least one neighboring node. Once trained, the MLP network is able to respond with minimal computational cost (real time operation capability) each time it is provided with the specified input variables. The training process can be performed offline from historical data of a single node (historical data 41) or at most from historical data of a few additional nodes (neighboring nodes), such as at most two additional nodes (two neighboring nodes) (historical data 61). This reduces considerably the computational cost of the training process, which can be performed at any conventional processing means, such as at a personal computer or laptop. The execution process (process of obtaining an estimation 56, 66) also has a low computation cost, again because data of a maximum number of a few nodes (preferably a total number of three nodes) is required.

In sum, for the training process, the starting point is a data set with information on the magnitudes to be inferred (active and reactive power injected per phase in a node, as well as voltage magnitude and voltage angle per phase in the node) at different time instants within a time period T, and with this, the model is trained. Once trained, given the active and reactive power injected per phase at a node (data measured at a node and optionally at neighboring nodes), the trained system estimates the voltage magnitude and voltage angle per phase, at the node.

The obtained per-phase voltage magnitude and voltage angle in a node (in general, in as many nodes as measurements or pseudo-measurements are available), can then be used by the distribution network control means to take action on the network to minimize the distribution losses and/or identify network problems, malfunction or disconnections. For example, the estimates can be used to balance the voltage load and therefore optimize or at least improve the quality of service for end-users in the distribution network.

The proposed method has been tested in the low-voltage network of Figure 3A. Many nodes of the network have been tested by training a respective MLP neural network. For example, an MLP neural network 60 has been trained with historical data of node 23 and with historical data of its neighboring nodes 6 and 18 (Figure 3A). The configuration of the MLP neural network was defined as follows: The number of neurons in the input layer is variable depending on the number of neighboring nodes used in the training under study. The number of neurons in the output layer is 6, one for each of the output variables to be predicted: voltage magnitude and angle for the current phase R, voltage magnitude and angle for the current phase S and voltage magnitude and angle for the current phase T. There are 6 hidden layers with 10 neurons per layer. The optimizer is the Adam algorithm (adaptive moment estimation). It is a method for efficient stochastic optimization that iteratively updates the network weights based on the training data and maintains the learning rate for each network weight. The method calculates individual adaptive learning rates from estimates of the first and second moments of the gradients. It has the particularity that it uses the moving average of the gradient, and not the gradient itself. The activation function used in all hidden neurons is the hyperbolic tangential. An increasing, continuous, and differentiable function is chosen since the method by which weights are inferred is the gradient method. The neurons of the hidden layers use as propagation rule the weighted sum of the inputs with the weights and on this weighted sum, the hyperbolic tangent activation function is applied. In this case, a small network of five layers is used, otherwise, in networks with many layers, the hyperbolic tangent activation should not be used due to the problem of gradient fading. The value of the learning rate is 0.001. The decay value of the learning rate is 0.000001. The initialization of the network weights follows the Xavier or Glorot methodology, which consists of a normal distribution of mean 0 and variable variance as a function of the number of input and output neurons.

Historical data of 1 month has been used, with sampling frequency of 15 minutes. Once the model has been trained, and given new active and reactive power values at a given inner node 23, as well as those of the neighboring nodes 6 and 18, the state estimation results for inner node 23, provided by the trained model, are:
For phase R: RMSE of the voltage magnitude: 1.696e-04 and RMSE of the voltage angle: 4.400e-04
For phase S: RMSE of the voltage magnitude: 4.536e-04 and RMSE of the voltage angle: 4.536e-04
For phase T: RMSE of the voltage magnitude: 4.204e-04 and RMSE of the voltage angle: 4.204e-04

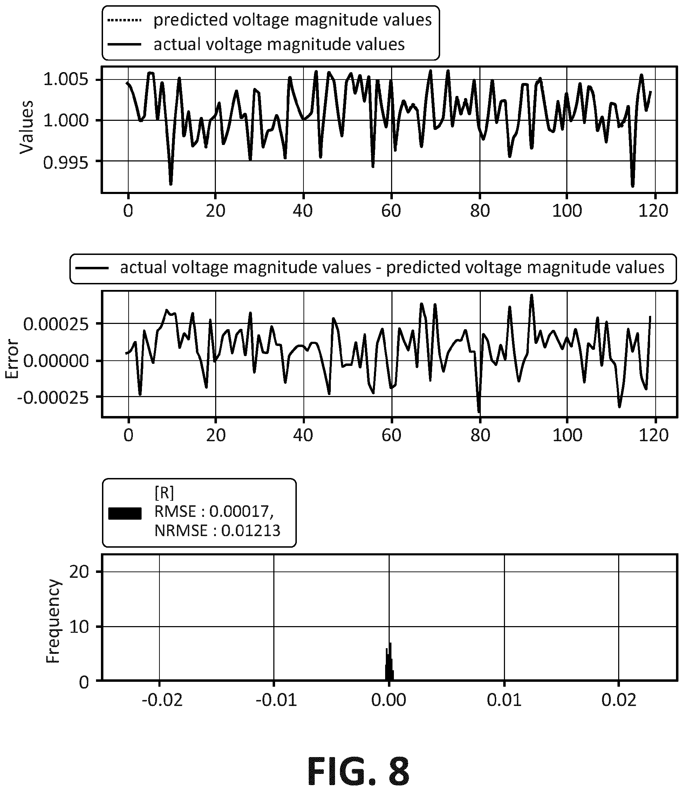

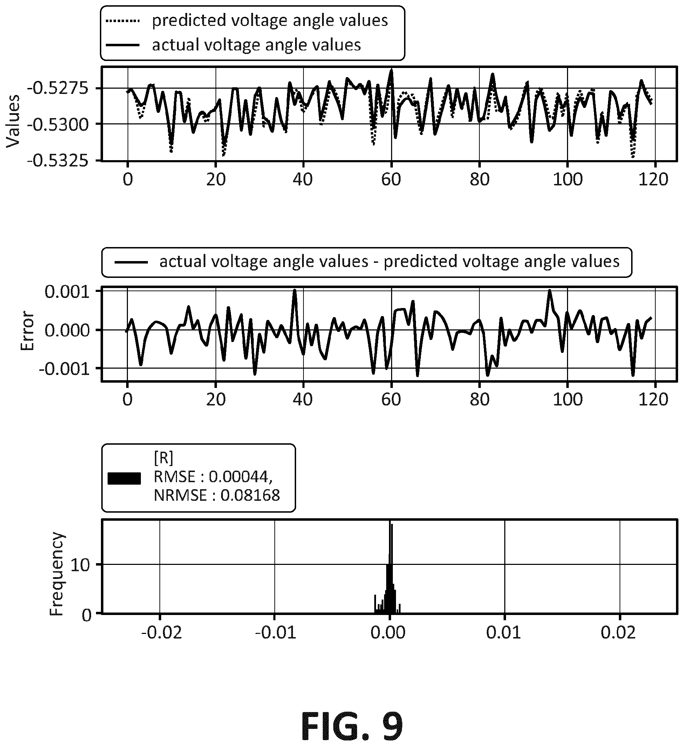

In Figures 8 and 9 the results for node 23 are shown, using input data of active and reactive power in node 23 and in neighboring nodes 6 and 18. As an example, the results obtained for the voltage magnitude (in Volts) (Figure 8) and voltage angle (in radians) (Figure 9) for phase R, are shown. A similar response is obtained for phases S and T (not shown). The upper graphs show predicted values (voltage magnitude in Figure 8 and voltage angle in Figure 9) versus actual values (voltage magnitude in Figure 8 and voltage angle in Figure 9). The middle graphs represent the differences between predicted values and actual values (voltage magnitude values in Figure 8 and voltage angle values in Figure 9). The lower graphs show the probability distributions characterizing the errors. The errors are calculated as the root mean square error (RMSE), i.e., the quadratic sum of the differences between predicted and actual values.

In this text, the term "comprises" and its derivations (such as "comprising", etc.) should not be understood in an excluding sense, that is, these terms should not be interpreted as excluding the possibility that what is described and defined may include further elements, steps, etc.

In the context of the present disclosure, the term "approximately" and terms of its family (such as "approximate", etc.) should be understood as indicating values very near to those which accompany the aforementioned term. That is to say, a deviation within reasonable limits from an exact value should be accepted, because a skilled person in the art will understand that such a deviation from the values indicated is inevitable due to measurement inaccuracies, etc. The same applies to the terms "about", "around" and "substantially".

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. - A computer-implemented method for assessing the state of a low-voltage distribution network comprising a plurality of nodes (17), the method comprising:
selecting a node (23) of the low-voltage distribution network (300);
assigning a neural network (60) to the selected node (23);
training (44) the neural network with a collection of historical data (41) collected during a certain time period, the historical data (41) comprising discrete values of active power measured at each phase (R, S, T) of the selected node (23), discrete values of reactive power measured at each phase (R, S, T) of the selected node (23), magnitude of voltage at each phase (R, S, T) of the selected node (23) and angle of voltage at each phase (R, S, T) of the selected node (23);
providing the trained neural network (54) with actual values of active power measured at each phase (R, S, T) of the selected node (23) and reactive power measured at each phase (R, S, T) of the selected node (23);
calculating (56) by the trained neural network (54) the magnitude of voltage at each phase (R, S, T) and the angle of voltage at each phase (R, S, T) of the selected node (23).

2. - The method of claim 1, further comprising repeating the steps of claim 1 for a plurality of nodes (17) of the low-voltage distribution network (300).

3. - The method of either claim 1 or 2, wherein the neural network (60) is a multilayer perceptron neural network.

4. - The method of any one of claims 1-3, wherein the historical data (41, 61) with which the neural network is trained further comprises: discrete values of active power measured at each phase (R, S, T) of at least one neighboring node (6, 18) and discrete values of reactive power measured at each phase (R, S, T) of at least one neighboring node (6, 18); and the actual values provided to the trained neural network (54, 64) further comprises actual values of reactive power measured at each phase (R, S, T) of the at least one neighboring node (6, 18) and active power measured at each phase (R, S, T) of the at least one neighboring node (6, 18).

5. - The method of claim 4, further comprising:
prior to training the neural network (60), applying a feature selection technique (62) for reducing the number of input variables, and
after the reduction, feeding the resulting subset of entries (63) into the neural network (60) for training.

6. - The method of any one of claims 1-5, wherein the actual values provided to the trained neural network (54, 64) further comprise discrete values at a previous time instant of at least one of the following: per-phase voltage magnitude and per-phase voltage angle at the node under analysis; active and reactive power per phase at the node under analysis; active and reactive power per phase at the at least one neighboring node.

7. - The method of any one of claims 1-6, wherein the historical data and actual values captured at a node are measurements made with a smart meter, or with a network analyzer, or with a phasor measurement unit, or with a transformer station supervisor or with a line supervisor.

8. - The method of any one of claims 1-7, wherein the historical data are captured along a period of time of between 1 and 3 months.

9. The method of any one of claims 1-8, wherein the historical data and actual values captured at a node are captured with a measuring frequency of between 1 and 60 minutes.

10. - The method of any one of claims 1-9, wherein the training process is performed offline.

11. - The method of any one of claims 1-10, wherein the training process is performed using a sliding window which temporal size is the size of said temporal period, thus allowing to dynamically adjust the learning process to the real conditions of the selected node.

12. - The method of any one of claims 1-10, further comprising, from the calculated (56) magnitude of voltage at each phase (R, S, T) and angle of voltage at each phase (R, S, T) of at least one selected node (23), actuating on the distribution network to minimize distribution losses and/or identify diverse problems of the distribution network, such as congestion and voltage limit violation.

13. - A device comprising processing means configured to perform the training stage (44) of the method of any one of claims 1-11.

14. - A device comprising processing means configured to perform the estimation stage (56) of the method of any one of claims 1-11.

15. A computer program product comprising computer program instructions/code for performing the method according to any one of claims 1-11, or a computer-readable memory/medium that stores program instructions/code for performing the method according to any one of claims 1-11.
